# EUROPÄISCHE PATENTSCHRIFT

(11) **EP 3 082 643 B1**
(45) Veröffentlichungstag und Bekanntmachung des Hinweises auf die Patenterteilung: **22.05.2019**
(21) Anmeldenummer: 14830521.2
(22) Anmeldetag: 18.12.2014
(51) Int. Cl.: A61C 13/00, A61C 13/20, F27B 17/02

(54) **VERFAHREN ZUR PLANUNG EINER SINTERUNG EINES ZAHNERSATZTEILS**
METHOD FOR PLANNING A SINTERING OF A DENTAL PROSTHESIS PART
PROCÉDÉ DE PLANIFICATION D'UN FRITTAGE D'UNE PARTIE DE PROTHÈSE DENTAIRE

(30) Priorität: 18.12.2013 DE 102013226497
(43) Veröffentlichungstag der Anmeldung: 26.10.2016
(73) Patentinhaber: Sirona Dental Systems GmbH, 64625 Bensheim (DE)
(72) Erfinder: FORNOFF, Peter, 64385 Reichelsheim (DE); SCHMIDT, Christian, 64625 Bensheim (DE)
(74) Vertreter: Sommer, Peter
(86) Internationale Anmeldenummer: PCT/EP2014/078387
(87) Internationale Veröffentlichungsnummer: WO 2015/091744

(56) Entgegenhaltungen:
- EP-A1- 2 620 733
- WO-A1-2014/016320
- US-A- 4 796 688
- US-A1- 2011 147 968

## Beschreibung

### Technisches Gebiet

Die Erfindung betrifft ein Verfahren zur Planung einer Sinterung eines Zahnersatzteils, wobei ein 3D-Modell des herzustellenden Zahnersatzteils bereits konstruiert wurde.

### Stand der Technik

Aus dem Stand der Technik sind mehrere Verfahren zur Planung von Sinterungsprozessen bekannt. Vor der Durchführung der Sinterung mittels eines Sinterofens kann der Benutzer ein bestimmtes Programm mit einem passenden Temperaturprofil für das hergestellte Zahnersatzteil aussuchen, wobei der Benutzer das verwendete Material und die Abmessungen des Zahnersatzteils berücksichtigt.

DE 10 2011 056 211 B3 offenbart eine Vorrichtung und ein Verfahren zum Sintern von Sintergut, insbesondere Zahngerüsten, wobei eine Schale von einem Verschlusselement abgedeckt ist, wobei der Rahmen der Schale mit einer Schutzgaszuführung verbunden ist. Die Heizrate, die Haltetemperatur sowie eine Abkühlzeit können manuell eingestellt werden.

EP 2 620 733 A1 offenbart ein Dentalgerät, wie ein dentaler Brennofen, mit wenigstens einem Betriebsprogramm, mit einem Speicher und mit wenigstens einer Erfassungsvorrichtung, wie einer Kamera. Mittels der Kamera kann das Objekt erfasst werden und mittels einer Anzeigevorrichtung das Objekt in der erfassten Form dargestellt werden. In einer Datenbank sind mehrere vorgegebene Referenzobjekte enthalten, wobei bei Übereinstimmung einer bestimmten Anzahl von Merkmalen eines Referenzobjektes mit dem Bild des erfassten Objekts die Auslösung eines dazugehörigen Betriebsprogramms erfolgt.

US 2009/0079101 A1 offenbart einen Sinterofen mit einer wärmeisolierten Kamera und einem Temperaturmessgerät. Bei einem Temperaturprofil beträgt die Heizrate 140 °C pro Minute, eine Haltetemperatur von 1400 °C und eine Abkühlrate von 50 °C pro Minute.

DE 10 2008 013 555 A1 offenbart einen Sinterofen zur Herstellung von Zahneratzteilen, wobei das Sintern der Zahnersatzteile entlang einer Sinterstrecke erfolgt. Die Zahnersatzteile werden beim Durchfahren dieser Sinterstrecke unterschiedlichen Temperaturen ausgesetzt. Die Sinterstrecke ist also in einzelne Sinterstreckensegmente eingeteilt, die auf verschiedene Temperaturen eingeregelt werden können. Die Träger mit den zu sinternden Zahnersatzteilen werden entlang der Sinterstrecke mittels eines Schiebers bewegt. Für jeden der Sinterstreckensegmente können unterschiedliche Temperaturen eingestellt werden. Dadurch können unterschiedliche Temperaturverläufe für die Sinterung unterschiedlicher Keramiken eingestellt werden.

Weitere Sinteröfen und entsprechende Verfahren sind aus der US 2011/0147968 A1, der US 4,796,688 A, der EP 2 620 733 A1 sowie der WO 2014/016320 A1 bekannt.

Ein Nachteil dieser Verfahren ist, dass der Benutzer durch Bedienungsfehler falsche Temperaturprofile einstellen kann, so dass dies zu Fertigungsfehlern des herzustellenden Zahnersatzteils führen kann. Ein Temperaturprofil mit einer zu hohen Heizrate kann beispielsweise bei Oxidkeramiken zu Rissen an der Oberfläche des Zahnersatzteils führen.

Die Aufgabe der vorliegenden Erfindung besteht daher darin, ein Verfahren zur Planung einer Sinterung bereitzustellen, dass solche Bedienungsfehler verhindert werden.

### Darstellung der Erfindung

Die Erfindung betrifft ein Verfahren zur Planung einer Wärmebehandlung eines Zahnersatzteils, wobei ein 3D-Modell des herzustellenden Zahnersatzteils bereits vorliegt. In Abhängigkeit von bestimmten Geometrieparametern des herzustellenden Zahneratzteils und von bestimmten Materialparametern des herzustellenden Zahnersatzteils wird ein Temperaturprofil für die Wärmebehandlung, wie Sinterung, Kristallisierung oder Glasierung, des Zahnersatzteils automatisch mittels eines Computers bestimmt, wobei die Materialparameter eines zur Herstellung des Zahnersatzteils ausgewählten Materials eine Wärmeleitfähigkeit, eine Thermoschockbeständigkeit, eine maximale Aufheizrate und/oder ein Temperaturgrenzwert für eine Phasenumwandlung des Materials sind.

Bei einer zunehmenden Wärmeleitfähigkeit des verwendeten Materials kann das Zahnersatzteil schneller durchgesintert werden, so dass die Haltezeit des Temperaturprofils verringert werden kann.

Bei einer hohen Thermoschockbeständigkeit des Materials kann auch die Heizrate erhöht werden, ohne Beschädigungen des Zahnersatzteils während der Sinterung zu verursachen.

Nach dem vorliegenden Verfahren kann eine theoretische maximale Heizrate für das jeweilige Zahnarztteil ermitteln bzw. bestimmt werden. Zur Bestimmung dieser maximale Heizrate können mechanische Kennwerte des verwendeten Materials, wie ein linearer Ausdehnungskoeffizient, ein E-Modul, Festigkeit, eine Querkontraktionszahl, eine Risszähigkeit, eine initiale Risslänge oder ein Formfaktor, sowie thermodynamische Kennwerte, wie eine volumenbezogene Wärmekapazität oder eine Wärmeleitfähigkeit, sowie die Geometrieparameter des Zahnersatzteils verwendet werden.

Bei diesem Verfahren wurde die Konstruktion des Zahnersatzteils bereits durchgeführt, so dass ein 3D-Modell des Zahnersatzteils vorliegt. Das herzustellende Zahnersatzteil kann beispielsweise eine Vollprothese für ein Implantat, eine Dentalprothese, eine Vollkrone, eine Teilkrone, eine Brücke aus mehreren ganzen Zähnen oder ein Inlay sein. Aufgrund von bestimmten Auswahlkriterien wird in Abhängigkeit von Geometrieparametern und/oder der Materialparameter des ausgewählten Materials das passende Temperaturprofil bestimmt. Die Bestimmung des Temperaturprofils kann beispielsweise durch eine automatische Auswahl des Temperaturprofils aus einer Vielzahl unterschiedlicher Temperaturprofile einer Datenbank oder durch Berechnung eines individuellen Temperaturprofils erfolgen. Das Temperaturprofil kann mindestens einen Aufheizschritt oder auch mehrere Aufheizschritte enthalten, wobei maßgeblich ist, dass eine maximale Heizrate, die abhängig vom verwendeten Material und maßgeblich von der Wandstärke des Zahnersatzteils abhängt, nicht überschritten wird. Denn dies könnte zu Rissen an der Oberfläche des Zahnersatzteils oder auch zum Abplatzen der oberen Schichten des Zahnersatzteils führen. Denn während des Sinterungsprozesses kann die äußere Schicht des Zahnersatzteils schneller schrumpfen als die inneren Schichten des Zahnersatzteils, so dass es zu mechanischen Spannungen führt. Nach dem Aufheizen des Zahnersatzteils mit der festgelegten Heizrate wird eine Haltetemperatur für die Dauer einer bestimmten Haltezeit behalten, wobei anschließend eine Abkühlphase erfolgt. Die Abkühlphase kann beispielsweise durch das Öffnen einer Tür des verwendeten Sinterofens erfolgen, so dass kühle Luft hineinströmen kann. Die Haltetemperatur und die Haltezeit werden so gewählt, dass zwar das herzustellende Zahnersatzteil vollständig durchgesintert wird jedoch keine Übersinterung erfolgt. Bei einer Übersinterung kann eine Korngröße des verwendeten zu sinternden Materials einen festgelegten Grenzwert überschreiten, so dass dies zu einer geringeren Festigkeit des Zahnersatzteils führen kann.

Ein Vorteil dieses Verfahrens besteht darin, dass Bedienungsfehler bei der manuellen Auswahl eines passenden Temperaturprofils ausgeschlossen werden, so dass dadurch Fertigungsfehler verhindert werden können.

Ein weiterer Vorteil dieses Verfahrens besteht darin, dass unter Berücksichtigung der Geometrieparameter und/oder der Materialparameter ein passendes Temperaturprofil ausgewählt werden kann, das eine möglichst geringe Dauer mit einer möglichst hohen Heizrate und möglichst geringer Haltezeit aufweist, so dass dadurch die Dauer der Wärmebehandlung des Zahnersatzteils verkürzt wird.

Vorteilhafterweise können die Geometrieparameter des Zahnersatzteils eine maximale laterale Wandstärke, eine maximale okklusale Wandstärke, ein Verhältnis aus der maximalen okklusalen Wandstärke und der maximalen lateralen Wandstärke, ein maximaler Querschnitt des Zahneratzteils, ein Gesamtvolumen des Zahnersatzteils, eine maximale Gesamtlänge des Zahnersatzteils und/oder eine maximale Querschnittsänderung des Zahneratzteils sein.

Die maximale laterale Wandstärke bezieht sich auf die seitliche Wandstärke des Zahnersatzteils beispielsweise an den Labialflächen bei Schneidezähnen bzw. bei Bukkalflächen von Backenzähnen. Die maximale okklusale Wandstärke bezieht sich auf die Wandstärke einer Okklusalfläche des Zahneratzteils. Der maximale Querschnitt des Zahnersatzteils bezieht sich auf einen Querschnitt senkrecht zu einer Zahnachse des Zahnersatzteils.

Aufgrund dieser Geometrieparameter wird also ein passendes Temperaturprofil ausgewählt, wobei insbesondere eine bestimmte Heizrate und eine bestimmte Haltezeit bei einer Haltetemperatur bestimmt werden.

Vorteilhafterweise kann das Temperaturprofil so bestimmt werden, dass bei einer steigenden maximalen lateralen Wandstärke, bei einer steigenden maximalen okklusalen Wandstärke, bei einem steigenden maximalen Bauteilquerschnitt und/oder bei einem steigenden Gesamtvolumen des Zahnersatzteils eine Heizrate des Temperaturprofils sinkt, eine Haltezeit des Temperaturprofils steigt und/oder eine Haltetemperatur des Temperaturprofils sinkt.

Bei einer steigenden Wandstärke nehmen auch die mechanischen Spannungen während der Sinterung zu, so dass die Heizrate verringert werden muss, um Beschädigungen am Zahnersatzteil zu verhindern.

Bei einem zunehmenden Bauteilquerschnitt bzw. beim Gesamtvolumen des Zahnersatzteils nimmt die Haltezeit zu, da es länger dauert das Zahnersatzteil vollständig durchzusintern.

Vorteilhafterweise kann das Temperaturprofil so bestimmt werden, dass bei einer steigenden Wärmeleitfähigkeit und/oder einer steigenden Thermoschockbeständigkeit eine Heizrate des Temperaturprofils steigt.

Dadurch kann die Heizrate abhängig von der Wärmeleitfähigkeit und von der Thermoschockbeständigkeit des höheren Materials erhöht werden, so dass die Gesamtdauer der Sinterung bekürzt werden kann.

Vorteilhafterweise kann die Wärmebehandlung eine Sinterung, eine Kristallisierung, eine Kombination aus einer Sinterung und einer Glasierung oder eine Kombination aus einer Kristallisierung und einer Glasierung sein.

Die Sinterung kann für Oxidkeramiken, wie Zirkoniumdioxid oder Aluminiumoxid, sowie für Nichtedelmetalllegierungen, wie eine CoCrMo-Legierung, angewendet werden.

Eine Kristallisierung erfolgt insbesondere bei Glaskeramiken mit dem Werkstoffsystem Lithiumdisilikat.

Fertig gesintert werden dentale Restaurationen, die aus angesinterten Oxidkeramiken insbesondere Zirkoniumdioxid und Aluminiumoxid gefertigt wurden. Aus Pulver gepresste und angesinterte Rohlinge aus Metall, insbesondere aus CoCrMo-Legierungen, müssen nach der mechanischen Weiterbearbeitung durch Schleifen oder Fräsen zu dentalen Restaurationen ebenfalls gesintert werden.

Alle metallischen oder keramischen Grundwerkstoffe können durch weitere Brennprozesse nach der Sinterung verblendet oder glasiert werden. Zusammen mit der Glasur als ein so genannter Oberflächenfinish kann auch eine Bemalung erfolgen, die im gleichen Ofenprozess gebrannt wird.

Die Glaskeramik hat darüber hinaus den Vorteil, dass sie im selben Brennprozess kristallisiert, bemalt und glasiert werden kann.

Vorteilhafterweise kann das ausgewählte Material zur Herstellung des Zahnersatzteils Zirkoniumdioxid sein, wobei das herzustellende Zahnersatzteil ein einzelner Zahn, eine Vollkrone, eine Teilkrone oder ein Inlay ist. Das Gesamtvolumen des Zahnersatzteils entspricht dabei höchstens dem Volumen eines Backenzahns, wobei die maximale laterale Wandstärke und/oder die maximale okklusale Wandstärke unterhalb eines Grenzwertes von 6 mm liegen. Unter Berücksichtigung dieser Faktoren wird ein erstes Temperaturprofil für eine Sinterung mit einer Heizrate zwischen 100 °C/Minute und 400 °C/Minute, mit einer Haltetemperatur zwischen 1500 °C und 1600 °C sowie einer Haltezeit zwischen 5 Minuten und 10 Minuten bestimmt.

Durch die relativ geringe Wandstärke und das geringe Gesamtvolumen des Zahnersatzteils wird eine relativ hohe Heizrate ermöglicht, so dass die Gesamtdauer verkürzt wird. Das geringe Gesamtvolumen ermöglicht auch, dass das Zahnersatzteil schneller gesintert ist, so dass die Haltezeit relativ gering gewählt ist und die gesamte Dauer der Sinterung damit zusätzlich verkürzt wird. Das erste Temperaturprofil ermöglicht also eine schnelle Sinterung für relativ kleine Zahnersatzteile.

Vorteilhafterweise kann das ausgewählte Material Zirkoniumdioxid sein, wobei das herzustellende Zahnersatzteil eine Brücke aus höchstens 6 verbundenen Zähnen ist oder aus höchstens 6 einzelnen Zähnen besteht. Unter Berücksichtigung dieser Faktoren wird ein zweites Temperaturprofil für eine Sinterung mit einer Heizrate zwischen 70 °C/Minute und 200 °C/Minute, mit einer Haltetemperatur zwischen 1450 °C und 1550 °C sowie einer Haltezeit zwischen 20 Minuten und 40 Minuten bestimmt.

Das zweite Temperaturprofil wird für Zahnersatzteile mit einem Gesamtvolumen von höchstens sechs Zähnen gewählt, wobei eine längere Haltezeit zum Durchsintern des Zahnersatzteils als beim ersten Temperaturprofil erforderlich ist.

Vorteilhafterweise kann das ausgewählte Material Zirkoniumdioxid sein, wobei das herzustellende Zahnersatzteil mehr als 6 einzelne Zähne umfasst, wobei ein drittes Temperaturprofil für eine Sinterung mit einer Heizrate zwischen 10 °C/Minute und 70 °C/Minute, mit einer Haltetemperatur zwischen 1500 °C und 1600 °C und einer Haltezeit zwischen 100 Minuten und 140 Minuten bestimmt wird.

Das dritte Temperaturprofil wird für relativ große Zahnersatzeile mit einem Gesamtvolumen von mehr als sechs Zähnen gewählt, wobei die Heizrate im Vergleich zum ersten Temperaturprofil und zum zweiten Temperaturprofil deutlich verringert wird, um Risse an der Oberfläche des Zahnersatzteils zu verhindern. Die Haltezeit wird im Vergleich zum ersten Temperaturprofil und zum zweiten Temperaturprofil deutlich erhöht, um eine vollständige Durchsinterung des Zahnersatzteils zu gewährleisten.

Vorteilhafterweise kann das ausgewählte Material Aluminiumoxid (Al₂O₃) sein, wobei ein viertes Temperaturprofil für eine Sinterung mit einer Heizrate zwischen 10 °C/Minute bis 70 °C/Minute, mit einer Haltetemperatur zwischen 1500°C und 1600°C sowie einer Haltezeit zwischen 100 Minuten und 140 Minuten bestimmt wird.

Das vierte Temperaturprofil ist für das Material Aluminiumoxid geeignet, wobei unabhängig von der Größe des Zahnersatzteils die Heizrate und die Haltezeit wie beim dritten Temperaturprofil gewählt ist.

Vorteilhafterweise kann das 3D-Modell des herzustellenden Zahnersatzteils mittels einer Anzeigevorrichtung graphisch dargestellt werden, wobei bestimmte Teilbereiche des 3D-Modells graphisch markiert werden, die bezüglich der labialen Wandstärke oder bezüglich der okklusalen Wandstärke einen bestimmten Grenzwert überschreiten.

Die Anzeigevorrichtung kann beispielsweise ein Monitor sein, der das konstruierte 3D-Modell des herzustellenden Zahnersatzteils graphisch darstellt. Diejenigen Bereiche bei denen die Wandstärke den bestimmten Grenzwert, wie beispielsweise in der Höhe von 3 mm, überschreitet, werden graphisch markiert. Auf diese Weise kann der Benutzer erkennen welche Teilbereiche des 3D-Modells die Geometrieparameter für das erste Temperaturprofil bzw. für das zweite Temperaturprofil nicht erfüllen. Der Benutzer, wie ein Zahnarzt oder ein Zahntechniker, kann dann diese markierten Teilbereiche entsprechend anpassen.

Vorteilhafterweise kann der Benutzer die markierten Teilbereiche manuell unter Verwendung virtueller Werkzeuge so anpassen bzw. dass die markierten Teilbereiche automatisch mittels des Computers so angepasst werden, dass der Grenzwert für die labiale Wandstärke oder die okklusale Wandstärke unterschritten wird. Dadurch kann für das nach diesem angepassten 3D-Modell herzustellende Zahnersatzteil die schnellere Sinterung mit dem ersten Temperaturprofil anstatt mit dem zweiten Temperaturprofil durchgeführt werden kann.

Der Benutzer kann also die markierten Bereiche so anpassen, dass der Grenzwert für die Wandstärke, beispielsweise in der Höhe von 3 mm, unterschritten wird. Dadurch werden die Geometrieparameter für das erste Temperaturprofil erfüllt, so dass die Sinterung mit dem ersten Temperaturprofil durchgeführt werden kann, so dass dies zu einer Verkürzung der Gesamtdauer der Sinterung im Vergleich zur Sinterung mit dem zweiten Temperaturprofil führt.

Vorteilhafterweise kann die Bestimmung des passenden Temperaturprofils durch eine Auswahl aus mehreren Temperaturprofilen erfolgen, die in einer Datenbank abgespeichert sind.

Die unterschiedlichen Temperaturprofile können beispielsweise in einem Speicher abgespeichert werden, der in einem Mikrocomputer angeordnet ist, der in den Sinterofen integriert ist. Dieser Speicher kann alternativ auch in einen Computer integriert sein, der außerhalb des Sinterofens angeordnet ist.

Die Kenndaten der Temperaturprofile, wie die Heizrate, die Haltezeit und/oder die Haltetemperatur können mittels einer Anzeigevorrichtung graphisch dargestellt werden. Die Anzeigevorrichtung kann beispielsweise ein Display sein, das am Sinterofen angepasst ist. Dabei erfolgt also die Auswahl automatisch mittels eines Computers, wobei die Kenndaten des ausgewählten Temperaturprofils graphisch angezeigt werden können.

Vorteilhafterweise kann die Bestimmung des passenden Temperaturprofils durch eine Berechnung eines individuellen Temperaturprofils erfolgen, der unter Berücksichtigung der Geometrieparameter und/oder der Materialparameter des herzustellenden Zahnersatzteils individuell berechnet wird.

Dadurch wird also ein individuelles Temperaturprofil unter Berücksichtigung der Geometrieparameter und/oder der Materialparameter berechnet. Dabei können bekannte mathematische Verfahren, wie Interpolation, verwendet werden.

Die Erfindung betrifft weiterhin ein System zur Durchführung eines Verfahrens zur Planung einer Wärmebehandlung eines Zahnersatzteils mittels eines Sinterofens umfassend einen Computer, wobei ein 3D-Modell des herzustellenden Zahnersatzteils bereits vorliegt. In Abhängigkeit von bestimmten Geometrieparametern des herzustellenden Zahneratzteils und von bestimmten Materialparametern des herzustellenden Zahnersatzteils ist dabei ein Temperaturprofil für die Sinterung des Zahnersatzteils automatisch mittels des Computers bestimmbar.

Das System ermöglicht also die Durchführung des oben genannten Verfahrens, wobei mittels des Computers automatisch ein passendes Temperaturprofil für das jeweilige Zahnersatzteil abhängig von den Geometrieparametern und von den Materialparametern bestimmt wird.

Ein Vorteil dieses Systems besteht darin, dass Bedienungsfehler durch den Benutzer, wie ein Zahnarzt oder ein Zahntechniker, bei der manuellen Auswahl eines passenden Temperaturprofils verhindert werden.

Vorteilhafterweise kann das System eine Anzeigevorrichtung aufweisen, wobei das 3D-Modell des herzustellenden Zahnersatzteils mittels der Anzeigevorrichtung graphisch darstellbar ist, wobei bestimmte Teilbereiche des 3D-Modells graphisch markierbar sind, die bezüglich der labialen Wandstärke oder der okklusalen Wandstärke einen bestimmten Grenzwert überschreiten.

Durch das Markieren der Teilbereiche, die bestimmte Geometrieparameter, wie die Wandstärke, beispielsweise für das erste Temperaturprofil nicht erfüllen, wird es dem Benutzer ermöglicht die Abmessungen dieser Teilbereiche und damit die erforderlichen Anpassungen des 3D-Modells besser einzuschätzen.

Vorteilhafterweise kann das System Bedienungsmittel aufweisen, wobei der Benutzer die markierten Teilbereiche manuell unter Verwendung der Bedienungselemente mittels virtueller Werkzeuge so anpasst bzw. dass die markierten Teilbereiche automatisch mittels des Computers so angepasst werden, dass der Grenzwert in der Höhe von 6 mm für die labiale Wandstärke oder die okklusale Wandstärke unterschritten wird. Dadurch kann für das nach diesem angepassten 3D-Modell herzustellende Zahnersatzteil die schnellere Sinterung mit dem ersten Temperaturprofil anstatt mit dem zweiten Temperaturprofil durchgeführt werden kann.

Durch diese Anpassung des 3D-Modells kann also die Sinterung mit dem ersten Temperaturprofil anstatt mit dem zweiten Temperaturprofil durchgeführt werden, so dass die Gesamtdauer der Sinterung dadurch verkürzt wird.

Vorteilhafterweise kann das System einen Speicher aufweisen, wobei die Bestimmung des passenden Temperaturprofils durch eine Auswahl aus mehreren Temperaturprofilen erfolgt, die in einer Datenbank im Speicher abgespeichert sind.

Vorteilhafterweise kann die Bestimmung des passenden Temperaturprofils durch eine Berechnung eines individuellen Temperaturprofils mittels des Computers erfolgen, wobei das individuelle Temperaturprofil unter Berücksichtigung der Geometrieparameter und/oder der Materialparameter des herzustellenden Zahnersatzteils individuell berechnet wird.

### Kurzbeschreibung der Zeichnungen

Die Erfindung wird anhand der Zeichnungen erläutert. Es zeigt, die
- Fig. 1: eine Skizze zur Verdeutlichung des vorliegenden Verfahrens, die
- Fig. 2: ein 3D-Modell des Zahnersatzteils mit markierten Bereichen, die
- Fig. 3: zeigt mehrere Temperaturprofile zur Durchführung einer Sinterung.

### Ausführungsbeispiele

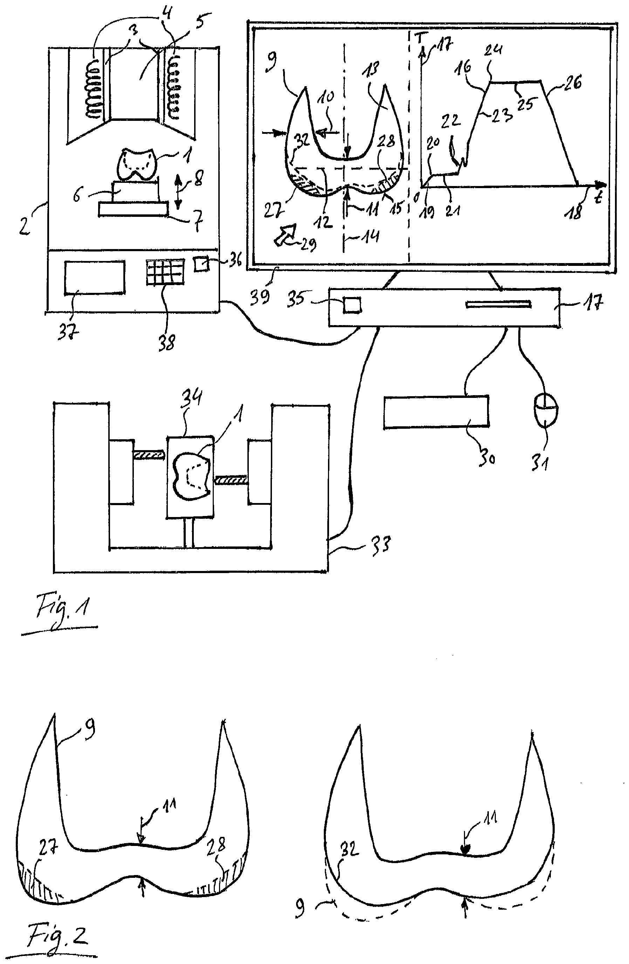

Die Fig. 1 zeigt eine Skizze zur Verdeutlichung des vorliegenden Verfahrens zur Planung einer Wärmebehandlung eines Zahnersatzteils 1 mittels eines Sinterofens 2. Der Sinterofen weist dabei Isolationselemente 3 und Heizelemente 4 auf, um die Temperatur innerhalb einer Brennkammer 5 zu regulieren. Die Wärmebehandlung des Zahnersatzteils 1 wie eine Sinterung, eine Kristallisierung oder eine Glasierung wird durchgeführt, indem in einem ersten Schritt die Kammer 5 mittels der Heizelemente 4 aufgeheizt wird. Nach dem Erreichen einer bestimmten Ladetemperatur, beispielsweise bei 300°C, wird die Kammer 5 in einem zweiten Schritt geöffnet, indem ein Sockel 6 in eine untere Endposition 7 verstellt wird. In einem dritten Schritt positioniert der Benutzer, wie ein Zahnarzt oder Zahntechniker, das zu sinternde Zahnersatzteil 1 auf dem Sockel 6. In einem vierten Schritt schließt die Kammer wieder, Indem der Sockel wieder in eine obere Endposition verstellt wird, wie durch die Pfeile 8 dargestellt ist. In einem fünften Schritt wird mittels der Heizelemente 4 die Kammer 5 weiter auf eine Haltetemperatur aufgeheizt und diese Haltetemperatur wird für die Dauer einer bestimmten Haltezeit gehalten. In einem sechsten Schritt erfolgt dann eine Abkühlphase. Die Abkühlphase kann beispielsweise durch das Abschalten der Heizelemente oder zusätzlich durch das Öffnen der Kammer 5 erfolgen, indem der Sockel in die untere Endposition 7 verstellt wird.

Bei der Durchführung des vorliegenden Verfahrens zur Planung der Wärmebehandlung liegt ein 3D-Modell 9 des Zahnersatzteils 1 bereits vor. Damit ist also die Konstruktion des Zahnersatzteils bereits abgeschlossen. Das 3D-Modell 9 wird mittels einer Anzeigevorrichtung 39, wie eines Monitors graphisch dargestellt. Das 3D-Modell 9 des Zahnersatzteils 1 weist bestimmte Geometrieparameter, wie eine laterale Wandstärke 10, eine okklusale Wandstärke 11, einen maximalen Querschnitt 12, der durch die eine gestrichelte Linie dargestellt ist, sowie ein Gesamtvolumen 13 des Zahnersatzteils, auf. Darüber hinaus wird bei der Konstruktion bereits festgelegt aus welchem Material das herzustellende Zahnersatzteil hergestellt werden soll. Als Material können beispielsweise Oxidkeramiken, wie Zirkondioxid, Aluminiumoxid, oder Nichtedelmetall-Legierungen, wie eine CoCrMo-Legierung, verwendet werden. Der maximale Querschnitt 12 des Zahnersatzteils kann beispielsweise senkrecht zu einer Zahnachse 14 bestimmt werden, die eine Symmetrieachse des Zahnersatzteils entsprechen kann. Die laterale Wandstärke 10 kann beispielsweise senkrecht zur Zahnachse 14 im labialen Bereich bzw. im bukkalen Bereich des Zahnersatzteils ermittelt werden. Die okklusale Wandstärke 11 kann beispielsweise parallel zur Zahnachse 14 auf einer Okklusalfläche 15 des 3D-Modells 9 ermittelt werden. Unter Verwendung der Geometrieparameter 10, 11, 12, 13 und der Materialparameter des ausgewählten Materials wird ein passendes Temperaturprofil 16 automatisch mittels eines Computers 17 ermittelt.

Der Computer 17 kann beispielsweise ein Mikrocomputer, ein Mikrochip oder ein herkömmlicher PC sein. Der Computer 17 kann extern außerhalb des Sinterofens 2 angeordnet sein. Alternativ kann der Computer 17 mit der Anzeigevorrichtung 39 auch in den Sinterofen 2 integriert sein.

Das Temperaturprofil 16 ist als ein Graph einer Temperatur 17 in Abhängigkeit von der Zeit 18 dargestellt. In einer ersten Phase 19 wird die Kammer 5 mit einer ersten Heizrate auf eine Vortrocknen-Temperatur 20 aufgeheizt in einer zweiten Phase 21 wird die Vortrocknen-Temperatur für eine erste Haltezeit gehalten, in einer dritten Phase 22 wird die Temperatur in der Kammer 5 bis zu einer Beladen-Temperatur beispielsweise in der Höhe von 300°C aufgeheizt. In einer vierten Phase wird die Kammer 5 mit dem zu sinternden Zahnersatzteil 1 beladen, so dass die Temperatur leicht abfällt. In einer fünften Phase 23 steigt die Temperatur in der Kammer 5 mit einer zweiten Heizrate bis zu einer zweiten Haltetemperatur 24. In einer sechsten Phase 25 werden die Heizelemente 4 so gesteuert, dass die Haltetemperatur 24 für eine Dauer einer bestimmten Haltezeit gehalten wird. In der siebten Phase 26 erfolgt eine Abkühlung des Zahnersatzteils 1. In Abhängigkeit der Geometrieparameter, insbesondere von der maximalen lateralen Wandstärke 10, von der maximalen okklusalen Wandstärke 11 und vom Gesamtvolumen 13, sowie in Abhängigkeit von den Materialparametern des ausgewählten Materials wird also mittels des Computers 17 das passende Temperaturprofil 16 bestimmt. Dabei werden insbesondere die Heizraten für die Aufheizphasen 19, 23, die Haltetemperaturen 20, 24 und die Haltezeiten der Phasen 21, 25 festgelegt.

Anschließend kann bei einer sogenannten Plausibilitätsprüfung geprüft werden, ob das konstruierte 3D-Modell 9 des Zahnersatzteils 1 bestimmte Anforderungen bezüglich der Geometrieparameter, wie der lateralen Wandstärke oder der okklusalen Wandstärke, erfüllt. Dabei können Teilbereiche 27 und 28, die gestrichelt dargestellt sind, markiert werden, die festgelegte Grenzwerte der Geometrieparameter nicht erfüllen. Beispielsweise können Teilbereiche 27, 28 markiert werden, die bezüglich der okklusalen Wandstärke einen Grenzwert von 6 mm überschreiten. Anschließend können diese markierten Teilbereiche 27 und 28 entweder manuell durch den Benutzer unter Verwendung eines virtuellen Werkzeugs 29, wie eines Cursors, oder automatisch mittels des Computers 17 so verformt werden, dass die Grenzwerte bezüglich der Geometrieparameter erfüllt sind. Die Steuerung des virtuellen Werkzeugs 29 kann mittels angeschlossener Eingabe Mittel, wie einer Tastatur 30 und einer Maus 31, erfolgen. Durch die Anpassung bzw. die Verformung des 3D-Modells 9 wird ein angepasstes 3D-Modell 32 erzeugt, das durch eine gestrichelte Linie dargestellt ist. Anhand des angepassten 3D-Modells 32 wird anschließend mittels einer CAM-Bearbeitungsmaschine 33 das zu sinternde Zahnersatzteil 1 aus einem Rohling 34 vollautomatisch herausgearbeitet. Nach der Herstellung des zu sinternden Zahnersatzteils 1 erfolgt die Sinterung mittels des Sinterofens 2, wie oben beschrieben.

Der Vorteil dieses Verfahrens besteht also darin, dass bereits vor der Herstellung des Zahnersatzteils mittels der CAM- Bearbeitungsmaschine 33 und vor der Sinterung des Zahnersatzteils 1 mittels des Sinterofens 2 eine Bestimmung eines passenden Temperaturprofils 16 sowie eine Plausibilitätsprüfung und eine mögliche Anpassung des 3D-Modells 9 erfolgen kann.

Die Bestimmung des Temperaturprofils 16 kann dabei beispielsweise durch eine Auswahl aus mehreren Temperaturprofilen erfolgen, die in einem Speicher 35 abgespeichert sind. Dieser Speicher 35 ist in den Computer 17 integriert. Alternativ dazu können die Temperaturprofile in einem zweiten Speicher 36 abgespeichert sein, der in den Sinterofen 2 integriert ist.

Die Bestimmung des passenden Temperaturprofils kann auch durch eine Berechnung eines individuellen Temperaturprofils erfolgen, der mittels des Computers 17 berechnet wird.

Das vorliegende Verfahren zur Planung einer Wärmebehandlung kann auch für mehrere Zahnersatzteile und mehrere Wärmebehandlungen erfolgen, bevor mit der Sinterung begonnen wird. Dabei kann eine Auftragsübersicht erstellt werden, die mehrere Aufträge umfasst. Ein Auftrag kann dabei die Kenndaten, wie den Namen des Patienten, die Art des Zahnersatzes, wie Vollkrone, Teilkrone oder Brücke, das Material zur Herstellung des Zahnersatzteils, die Art der Wärmebehandlung, wie Sinterung, Kristallisierung oder Glasierung, und die Art des passenden Temperaturprofils umfassen. Die Aufträge mit diesen Kenndaten können beispielsweise mittels eines Displays 37 angezeigt werden, das in den Sinterofen 2 integriert ist. Alternativ könnten die Aufträge mit den Kenndaten auch mittels der Anzeigevorrichtung 39 angezeigt werden. Mittels eines Bedienfeldes 38 kann der Benutzer vor der Durchführung der Sinterung den jeweiligen Auftrag mit dem zugeordneten Temperaturverlauf auswählen. Anschließend wird also die Sinterung automatisch mit einem passenden Temperaturprofil durchgeführt.

Die Fig. 2 zeigt das 3D-Modell 9 des Zahnersatzteils 1 aus Fig. 1, wobei die Bereiche 27 und 28 markiert sind, die bezüglich der okklusalen Wandstärke ein Grenzwert beispielsweise in Höhe von 6 mm überschreiten.

Nach der Anpassung bzw. der Verformung des 3D-Modells 9, das gestrichelt dargestellt ist, wird ein angepasstes 3D-Modell 32 erzeugt. Anhand des angepassten 3D-Modells 32 wird dann das Zahnersatzteil 1 mittels der CAM-Bearbeitungsmaschine 33 aus Fig. 1 herausgearbeitet.

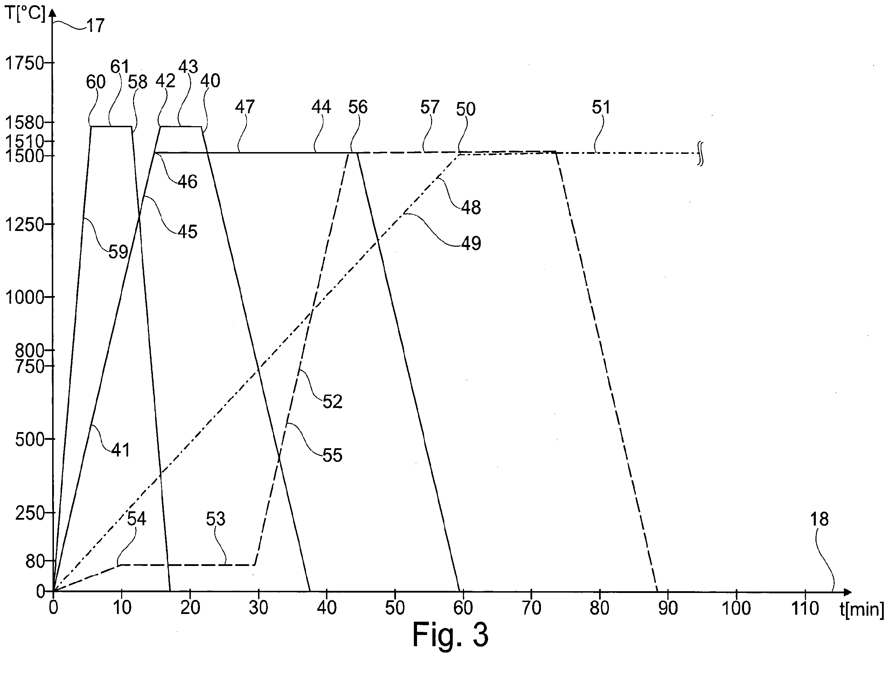

Die Fig. 3 zeigt mehrere Temperaturprofile zur Durchführung einer Sinterung, wobei die Temperatur 17 in °C in Abhängigkeit von der Zeit 18 in Minuten aufgetragen ist. Ein erstes Temperaturprofil 40 weist eine Heizrate 41 in der Höhe von 100 °C/min, eine Haltetemperatur 42 in der Höhe von 1580 °C und eine Haltezeit 43 in der Höhe von 6 Minuten auf. Ein zweites Temperaturprofil 44 weist eine Heizrate 45 in der Höhe von 100 °C/min, eine Haltetemperatur 46 in der Höhe von 1510 °C und eine Haltezeit 47 von 30 Minuten auf. Ein drittes Temperaturprofil 48, das durch eine Strichpunktlinie dargestellt ist, weist eine Heizrate 49 in der Höhe von 25 °C, eine Haltetemperatur 50 in der Höhe von 1510 °C und eine Haltezeit 51 von 120 Minuten auf. Ein viertes Temperaturprofil 52, das durch eine gestrichelte Linie dargestellt ist, weist eine Vortrocknen-Phase 53 auf, wobei die Temperatur auf eine Vortrocknen-Temperatur 54 aufgeheizt wird und 20 Minuten lang gehalten wird. Anschließend erfolgt die Aufheizphase mit einer Heizrate 55 in der Höhe von 100 °C/Minute bis zu einer Haltetemperatur 56 in der Höhe von 1510 °C. Diese Haltetemperatur 56 wird dann für die Dauer einer Haltezeit 57 von 30 Minuten gehalten wobei daraufhin eine Abkühlphase erfolgt. Ein fünftes Temperaturprofil 58 weist eine Heizrate 59 in der Höhe von 300 °C/min, eine Haltetemperatur 60 in der Höhe von 1580 °C und eine Haltezeit von 6 Minuten auf.

Das erste Temperaturprofil 40 ist insbesondere für kleine Zahnersatzteile mit einer geringen Wandstärke beispielsweise unterhalb von 6 mm und einem geringen Gesamtvolumen geeignet, wobei die hohe Heizrate 41 und die geringe Haltezeit 43 von 6 Minuten eine kurze Sinterungsdauer ermöglicht. Das zweite Temperaturprofil 44 ist für mittelgroße Zahnersatzteile beispielsweise mit einer maximalen Wandstärke von mehr als 6 mm und bestehend aus höchstens sechs einzelnen Zähnen geeignet. Das dritte Temperaturprofil 48 ist für große Zahnersatzteile, wie Brücken aus mehr als sechs Zähnen geeignet. Das vierte Temperaturprofil 52 ist für Materialien geeignet, bei denen eine Vortrocknung vor der Sinterung erforderlich ist.

Das 3D-Modell 9 aus Fig. 1 und Fig. 2 kann also durch den Benutzer oder automatisch mittels des Computers so verformt werden, dass die Anforderungen bzw. die Grenzwerte für ein bestimmtes Temperaturprofil erfüllt sind. In Fig. 2 ist dargestellt, dass das 3D-Modell 9 so angepasst wurde, dass die okklusale Wandstärke 11 einen Grenzwert in der Höhe von 6 mm nicht überschreitet. Damit kann also für das nach dem angepassten 3D-Modell 32 herzustellende Zahnersatzteil 1 die Sinterung mit dem ersten Temperaturprofil 40 anstatt mit dem zweiten Temperaturprofil 44 durchgeführt werden. Der Vorteil dieser Anpassung liegt also darin, dass die Dauer der Sinterung verkürzt wird.

### Bezugszeichen

- 1: Zahnersatzteil
- 2: Sinterofen
- 3: Isolationselement
- 4: Heizelement
- 5: Brennkammer
- 6: Sockel
- 7: Endposition
- 8: Pfeil
- 9: 3D-Modell
- 10: laterale Wandstärke
- 11: okklusale Wandstärke
- 12: Querschnitt
- 13: Gesamtvolumen
- 14: Zahnachse
- 15: Qkklusalfläche
- 16: Temperaturprofil
- 17: Computer
- 18: Zeit
- 19: erste Phase
- 20: Vortrocknen-Temperatur
- 21: zweite Phase
- 22: dritte Phase
- 23: fünfte Phase
- 24: Haltetemperatur
- 25: sechste Phase
- 26: siebte Phase
- 27: Teilbereich
- 28: Teilbreich
- 29: virtuelles Werkzeug
- 30: Tastatur
- 31: Maus
- 32: angepasstes 3D-Modell
- 33: CAM-Bearbeitungsmaschine
- 34: Rohling
- 35: Speicher
- 36: zweiter Speicher
- 37: Display
- 38: Bedienfeld
- 39: Anzeigevorrichtung
- 40: erstes Temperaturprofil
- 41: Heizrate
- 42: Haltetemperatur
- 43: Haltezeit
- 44: zweites Temperaturprofil
- 45: Heizrate
- 46: Haltetemperatur
- 47: Haltezeit
- 48: drittes Temperaturprofil
- 49: Heizrate
- 50: Haltetemperatur
- 51: Haltezeit
- 52: viertes Temperaturprofil
- 53: Vortrocknen-Phase
- 54: Vortrocknen Temperatur
- 55: Heizrate
- 56: Haltetemperatur
- 57: Haltezeit
- 58: fünftes Temperaturprofil
- 59: Heizrate
- 60: Haltetemperatur

## Patentansprüche

1. Verfahren zur Planung einer Wärmebehandlung eines Zahnersatzteils (1), wobei ein 3D-Modell (9) des herzustellenden Zahnersatzteils (1) bereits vorliegt, **dadurch gekennzeichnet, dass** in Abhängigkeit von bestimmten Geometrieparametern (10, 11, 12, 13) des 3D-Modells (9) und von bestimmten Materialparametern des herzustellenden Zahnersatzteils (1) ein Temperaturprofil (16) für die Wärmebehandlung des Zahnersatzteils (1) automatisch mittels eines Computers (17) bestimmt wird, wobei die Materialparameter eines zur Herstellung des Zahnersatzteils (1) ausgewählten Materials eine Wärmeleitfähigkeit, eine Thermoschockbeständigkeit, eine maximale Aufheizrate und/oder ein Temperaturgrenzwert für eine Phasenumwandlung des Materials sind.

2. Verfahren nach Anspruch 1, **dadurch gekennzeichnet, dass** die Geometrieparameter (10, 11, 12, 13) des 3D-Modells (9) vom Zahnersatzteil (1) eine maximale laterale Wandstärke (10), eine maximale okklusale Wandstärke (11), ein Verhältnis aus der maximalen okklusalen Wandstärke (11) und der maximalen lateralen Wandstärke (10), ein maximaler Querschnitt (12) des Zahnersatzteils (1), ein Gesamtvolumen (13) des Zahnersatzteils (1), eine maximale Gesamtlänge des Zahnersatzteils (1) und/oder eine maximale Querschnittsänderung des Zahnersatzteils (1) sind.

3. Verfahren nach Anspruch 2, **dadurch gekennzeichnet, dass** das Temperaturprofil (16) so bestimmt wird, dass bei einer steigenden maximalen lateralen Wandstärke (10), bei einer steigenden maximalen okklusalen Wandstärke (11), bei einem steigenden maximalen Bauteilquerschnitt und/oder bei einem steigenden Gesamtvolumen (13) des Zahnersatzteils (1) eine Heizrate (41, 45, 49, 55, 59) des Temperaturprofils (16) sinkt, eine Haltezeit (43, 47, 51, 57) des Temperaturprofils (16) steigt und/oder eine Haltetemperatur (42, 46, 50, 56, 60) des Temperaturprofils (16) sinkt.

4. Verfahren nach dem Anspruch 1, **dadurch gekennzeichnet, dass** das Temperaturprofil (16) so bestimmt wird, dass bei einer steigenden Wärmeleitfähigkeit und/oder einer steigenden Thermoschockbeständigkeit eine Heizrate (41, 45, 49, 55, 59) des Temperaturprofils (16) steigt.

5. Verfahren nach einem der Ansprüche 1 bis 4, **dadurch kennzeichnet, dass** die Wärmebehandlung eine Sinterung, eine Kristallisierung, eine Kombination aus einer Sinterung und einer Glasierung oder eine Kombination aus einer Kristallisierung und einer Glasierung ist.

6. Verfahren nach einem der Ansprüche 1 bis 5, **dadurch gekennzeichnet, dass** das ausgewählte Material zur Herstellung des Zahnersatzteils (1) Zirkoniumdioxid (ZrO₂) ist, wobei das herzustellende Zahnersatzteil (1) ein einzelner Zahn, eine Vollkrone, mindestens eine Teilkrone oder mindestens ein Inlay ist, wobei das Gesamtvolumen (13) des Zahnersatzteils (1) höchstens dem Volumen eines Backenzahns entspricht, wobei die maximale lateralen Wandstärke (10) und/oder die maximale okklusale Wandstärke (11) unterhalb eines Grenzwertes von 6 mm liegt, wobei ein erstes Temperaturprofil (40) für eine Sinterung mit einer Heizrate (41) zwischen 100 °C/Minute und 400 °C/Minute, mit einer Haltetemperatur (42) zwischen 1500 °C und 1600 °C sowie einer Haltezeit (43) zwischen 5 Minuten und 10 Minuten bestimmt wird.

7. Verfahren nach einem der Ansprüche 1 bis 5, **dadurch gekennzeichnet, dass** das ausgewählte Material Zirkoniumdioxid (ZrO₂) ist, wobei das herzustellende Zahnersatzteil eine Brücke aus höchstens 6 verbundenen Zähnen ist oder aus höchstens 6 einzelnen Zähnen bzw. Teilkronen besteht, wobei ein zweites Temperaturprofil (44) für eine Sinterung mit einer Heizrate (45) zwischen 70 °C/Minute und 200 °C/Minute, mit einer Haltetemperatur (46) zwischen 1450 °C und 1550 °C sowie einer Haltezeit (47) zwischen 20 Minuten und 40 Minuten bestimmt wird.

8. Verfahren nach einem der Ansprüche 1 bis 5, **dadurch gekennzeichnet, dass** das ausgewählte Material Zirkoniumdioxid (ZrO₂) ist, wobei das herzustellende Zahnersatzteil mehr als 6 einzelne Zähne umfasst, wobei ein drittes Temperaturprofil (48) für eine Sinterung mit einer Heizrate (49) zwischen 10 °C/Minute und 70 °C/Minute, mit einer Haltetemperatur (50) zwischen 1500 °C und 1600 °C und einer Haltezeit (51) zwischen 100 Minuten und 140 Minuten bestimmt wird.

9. Verfahren nach einem der Ansprüche 1 bis 5, **dadurch gekennzeichnet, dass** das ausgewählte Material Aluminiumoxid (Al₂O₃) ist, wobei ein viertes Temperaturprofil (52) für eine Sinterung mit einer Heizrate (55) zwischen 10 °C/Minute bis 70 °C/Minute, mit einer Haltetemperatur (56) zwischen 1500°C und 1600°C sowie einer Haltezeit (57) zwischen 100 Minuten und 140 Minuten bestimmt wird.

10. Verfahren nach einem der Ansprüche 1 bis 9, **dadurch gekennzeichnet, dass** das 3D-Modell (9) des herzustellenden Zahnersatzteils (1) mittels einer Anzeigevorrichtung (39) graphisch dargestellt wird, wobei bestimmte Teilbereiche (27, 28) des 3D-Modells (9) graphisch markiert werden, die bezüglich der labialen Wandstärke oder der okklusalen Wandstärke (11) einen bestimmten Grenzwert überschreiten.

11. Verfahren nach Anspruch 10, **dadurch gekennzeichnet, dass** der Benutzer die markierten Teilbereiche (27, 28) manuell unter Verwendung virtueller Werkzeuge (29) so anpasst bzw. dass die markierten Teilbereiche (27, 28) automatisch mittels des Computers (17) so angepasst werden, dass der Grenzwert für die labiale Wandstärke (10, 11) oder die okklusale Wandstärke (11) unterschritten wird, so dass für das nach diesem angepassten 3D-Modell (32) herzustellende Zahnersatzteil (1) die Sinterung mit dem ersten Temperaturprofil (40) anstatt mit dem zweiten Temperaturprofil (44) durchgeführt werden kann.

12. System zur Durchführung eines Verfahrens zur Planung einer Wärmebehandlung eines Zahnersatzteils (1) mittels eines Sinterofens (2) umfassend einen Computer (17), wobei ein 3D-Modell (9) des herzustellenden Zahnersatzteils (1) bereits vorliegt, **dadurch gekennzeichnet, dass** in Abhängigkeit von bestimmten Geometrieparametern (10, 11, 12, 13) des 3D-Modells (9) und von bestimmten Materialparametern des herzustellenden Zahnersatzteils (1) ein Temperaturprofil (16) für die Sinterung des Zahnersatzteils (1) automatisch mittels des Computers (17) bestimmbar ist, wobei die Materialparameter eines zur Herstellung des Zahnersatzteils (1) ausgewählten Materials eine Wärmeleitfähigkeit, eine Thermoschockbeständigkeit, eine maximale Aufheizrate und/oder ein Temperaturgrenzwert für eine Phasenumwandlung des Materials sind.

13. System nach Anspruch 12, **dadurch gekennzeichnet, dass** die Geometrieparameter (10, 11, 12, 13) des 3D-Modells (9) vom Zahnersatzteil (1) eine maximale laterale Wandstärke (10), eine maximale okklusale Wandstärke (11), ein Verhältnis aus der maximalen okklusalen Wandstärke (11) und der maximalen lateralen Wandstärke (10), ein maximaler Querschnitt (12) des Zahneratzteils, ein Gesamtvolumen (13) des Zahnersatzteils (1), eine maximale Gesamtlänge des Zahnersatzteils (1) und/oder eine maximale Querschnittsänderung des Zahneratzteils sind.

14. System nach Anspruch 12 oder 13, **dadurch gekennzeichnet, dass** das System eine Anzeigevorrichtung (39) aufweist, wobei das 3D-Modell (9) des herzustellenden Zahnersatzteils (1) mittels der Anzeigevorrichtung (39) graphisch darstellbar ist, wobei bestimmte Teilbereiche (27, 28) des 3D-Modells (9) graphisch markierbar sind, die bezüglich der labialen Wandstärke oder der okklusalen Wandstärke einen bestimmten Grenzwert überschreiten.

15. System nach Anspruch 14, **dadurch gekennzeichnet, dass** das System Bedienungsmittel (30, 31) aufweist, wobei der Benutzer die markierten Teilbereiche (27, 28) manuell unter Verwendung der Bedienungselemente (30, 31) mittels virtueller Werkzeuge (29) so anpasst bzw. dass die markierten Teilbereiche (27, 28) automatisch mittels des Computers (17) so angepasst werden, dass der Grenzwert für die labiale Wandstärke oder die okklusale Wandstärke (11) unterschritten wird, so dass für das nach diesem angepassten 3D-Modell (9, 32) herzustellende Zahnersatzteil die Sinterung mit dem ersten Temperaturprofil (16) anstatt mit dem zweiten Temperaturprofil (16) durchgeführt werden kann.

## Claims

1. Method for planning a heat treatment of a dental prosthetic part (1), wherein a 3D model (9) of the dental prosthetic part (1) to be produced already exists, **characterized in that** a temperature profile (16) for the heat treatment of the dental prosthetic part (1) is determined automatically with the aid of a computer (17) as a function of determined geometric parameters (10, 11, 12, 13) of the 3D model (9) and of determined material parameters of the dental prosthetic part (1) to be produced, wherein the material parameters of a material selected for producing the dental prosthetic part (1) are a thermal conductivity, a thermal shock resistance, a maximum heating rate and/or a temperature limit value for a phase transformation of the material.

2. Method according to Claim 1, **characterized in that** the geometric parameters (10, 11, 12, 13) of the 3D model (9) of the dental prosthetic part (1) are a maximum lateral wall thickness (10), a maximum occlusal wall thickness (11), a ratio of the maximum occlusal wall thickness (11) and the maximum lateral wall thickness (10), a maximum cross section (12) of the dental prosthetic part (1), a total volume (13) of the dental prosthetic part (1), a maximum total length of the dental prosthetic part (1) and/or a maximum cross-sectional change of the dental prosthetic part (1).

3. Method according to Claim 2, **characterized in that** the temperature profile (16) is determined such that, with increasing maximum lateral wall thickness (10), with increasing maximum occlusal wall thickness (11), with increasing maximum component cross section and/or with increasing total volume (13) of the dental prosthetic part (1), a heating rate (41, 45, 49, 55, 59) of the temperature profile (16) decreases, a holding time (43, 47, 51, 57) of the temperature profile (16) increases and/or a holding temperature (42, 46, 50, 56, 60) of the temperature profile (16) decreases.

4. Method according to Claim 1, **characterized in that** the temperature profile (16) is determined such that a heating rate (41, 45, 49, 55, 59) of the temperature profile (16) increases with increasing thermal conductivity and/or increasing thermal shock resistance.

5. Method according to any one of Claims 1 to 4, **characterized in that** the heat treatment comprises sintering, crystallization, a combination of sintering and glazing, or a combination of crystallization and glazing.

6. Method according to any one of Claims 1 to 5, **characterized in that** the selected material for producing the dental prosthetic part (1) is zirconium dioxide (ZrO₂), wherein the dental prosthetic part (1) to be produced is a single tooth, a full crown, at least a partial crown or at least an inlay, wherein the total volume (13) of the dental prosthetic part (1) corresponds to at most the volume of a molar, wherein the maximum lateral wall thickness (10) and/or the maximum occlusal wall thickness (11) is below a limit value of 6 mm, wherein a first temperature profile (40) for sintering at a heating rate (41) between 100°C/minute and 400°C/minute, with a holding temperature (42) between 1500°C and 1600°C and a holding time (43) between 5 minutes and 10 minutes is determined.

7. Method according to any one of Claims 1 to 5, **characterized in that** the selected material is zirconium dioxide (ZrO₂), wherein the dental prosthetic part to be produced is a bridge consisting of at most six connected teeth or consisting of at most six individual teeth or partial crowns, wherein a second temperature profile (44) for sintering at a heating rate (45) between 70°C/minute and 200°C/minute, with a holding temperature (46) between 1450°C and 1550°C and a holding time (47) between 20 minutes and 40 minutes is determined.

8. Method according to any one of Claims 1 to 5, **characterized in that** the selected material is zirconium dioxide (ZrO₂), wherein the dental prosthetic part to be produced comprises more than 6 individual teeth, wherein a third temperature profile (48) for sintering at a heating rate (49) between 10°C/minute and 70°C/minute, with a holding temperature (50) between 1500°C and 1600°C and a holding time (51) between 100 minutes and 140 minutes is determined.

9. Method according to any one of Claims 1 to 5, **characterized in that** the selected material is aluminum oxide (Al₂O₃), wherein a fourth temperature profile (52) for sintering at a heating rate (55) between 10°C/minute to 70°C/minute, with a holding temperature (56) between 1500°C and 1600°C and a holding time (57) between 100 minutes and 140 minutes is determined.

10. Method according to any one of Claims 1 to 9, **characterized in that** the 3D model (9) of the dental prosthetic part (1) to be produced is graphically displayed by means of a display device (39), wherein specific subregions (27, 28) of the 3D model (9) that exceed a specific limit value with respect to the labial wall thickness or the occlusal wall thickness (11) are graphically marked.

11. Method according to Claim 10, **characterized in that** the user manually adjusts the marked subregions (27, 28) by means of virtual tools (29) or the marked subregions (27, 28) are automatically adjusted by means of the computer (17) such that the value for the labial wall thickness (10, 11) or the occlusal wall thickness (11) is less than the limit value, so that sintering for the dental prosthetic part (1) to be produced according to the 3D model (32) can be carried out using the first temperature profile (40) instead of the second temperature profile (44).

12. System for carrying out a method for planning a heat treatment of a dental prosthetic part (1) by means of a sintering furnace (2) comprising a computer (17), wherein a 3D model (9) of the dental prosthetic part (1) to be produced already exists, **characterized in that** a temperature profile (16) for the sintering of the dental prosthetic part (1) can be determined automatically with the aid of a computer (17) as a function of determined geometric parameters (10, 11, 12, 13) of the 3D model (9) and of determined material parameters of the dental prosthetic part (1) to be produced, wherein the material parameters of a material selected for producing the dental prosthetic part (1) are a thermal conductivity, a thermal shock resistance, a maximum heating rate and/or a temperature limit value for a phase transformation of the material.

13. System according to Claim 12, **characterized in that** the geometric parameters (10, 11, 12, 13) of the 3D model (9) of the dental prosthetic part (1) are a maximum lateral wall thickness (10), a maximum occlusal wall thickness (11), a ratio of the maximum occlusal wall thickness (11) and the maximum lateral wall thickness (10), a maximum cross section (12) of the dental prosthetic part (1), a total volume (13) of the dental prosthetic part, a maximum total length of the dental prosthetic part (1) and/or a maximum cross-sectional change of the dental prosthetic part.

14. System according to Claim 12 or 13, **characterized in that** the system comprises a display device (39), wherein the 3D model (9) of the dental prosthetic part (1) to be produced can be graphically displayed by means of the display device (39), wherein specific subregions (27, 28) of the 3D model (9) that exceed a specific limit value with respect to the labial wall thickness or the occlusal wall thickness can be graphically marked.

15. System according to Claim 14, **characterized in that** the system comprises operating means (30, 31), wherein the user manually adjusts the marked subregions (27, 28) by means of virtual tools (29) using the operating elements (30, 31) or the marked subregions (27, 28) are automatically adjusted by means of the computer (17) such that the value for the labial wall thickness or the occlusal wall thickness (11) is less than the limit value, so that sintering for the dental prosthetic part to be produced according to the 3D model (9, 32) can be carried out using the first temperature profile (16) instead of the second temperature profile (16).

## Revendications

1. Procédé pour la planification d'un traitement thermique d'une prothèse dentaire (1), un modèle 3D (9) de la prothèse dentaire (1) étant déjà disponible, **caractérisé en ce que**, en fonction de paramètres géométriques (10, 11, 12, 13) déterminés du modèle 3D (9) et de paramètres de matériaux déterminés de la prothèse dentaire (1) à fabriquer, un profil de température (16) pour le traitement thermique de la prothèse dentaire (1) est déterminé automatiquement au moyen d'un ordinateur (17), les paramètres de matériaux d'un matériau sélectionné pour la fabrication de la prothèse dentaire (1) étant une conductivité thermique, une résistance au choc thermique, un taux de chauffage maximal et/ou une valeur limite de température pour une transformation de phase du matériau.

2. Procédé selon la revendication 1, **caractérisé en ce que** les paramètres géométriques (10, 11, 12, 13) du modèle 3D (9) de la prothèse dentaire (1) sont une épaisseur de paroi latérale maximale (10), une épaisseur de paroi occlusale maximale (11), un rapport entre l'épaisseur de paroi occlusale maximale (11) et l'épaisseur de paroi latérale maximale (10), une section transversale maximale (12) de la prothèse dentaire (1), un volume total (13) de la prothèse dentaire (1), une longueur totale maximale de la prothèse dentaire (1) et/ou une variation de section transversale de la prothèse dentaire (1).

3. Procédé selon la revendication 2, **caractérisé en ce que** le profil de température (16) est déterminé de telle façon que dans le cas d'une épaisseur de paroi latérale maximale (10) croissante, dans le cas d'une épaisseur de paroi occlusale maximale (11) croissante, dans le cas d'une section transversale maximale de composant croissante et/ou dans le cas d'un volume total croissant (13) de la prothèse dentaire (1), un taux de chauffage (41, 45, 49, 55, 59) du profil de température (16) décroit, un temps de maintien (43, 47, 51, 57) du profil de température (16) croit et/ou une température de maintien (42, 46, 50, 56, 60) du profil de température (16) décroit.

4. Procédé selon la revendication 1, **caractérisé en ce que** le profil de température (16) est déterminé de telle façon que, dans le cas d'une conductivité thermique croissante et/ou d'une résistance au choc thermique croissante, un taux de chauffage (41, 45, 49, 55, 59) du profil de température (16) croit.

5. Procédé selon l'une quelconque des revendications 1 à 4, **caractérisé en ce que** le traitement thermique consiste d'un frittage, d'une cristallisation, d'une combinaison d'un frittage et d'un glaçage ou de la combinaison d'une cristallisation et d'un glaçage.

6. Procédé selon l'une quelconque des revendications 1 à 5, **caractérisé en ce que** le matériau sélectionné pour la fabrication de la prothèse dentaire (1) est de l'oxyde de zirconium (ZrO₂), la prothèse dentaire (1) à fabriquer étant une dent individuelle, une couronne anatomique, au moins une couronne partielle ou au moins un inlay, le volume total (13) de la prothèse dentaire (1) correspondant tout au plus au volume d'une molaire, l'épaisseur de paroi latérale maximale (10) et/ou l'épaisseur de paroi occlusale maximale (11) étant inférieures à une valeur limite de 6 mm, un premier profil de température (40) pour un frittage étant déterminé avec un taux de chauffage (41) situé entre 100 °C/minute et 400 °C/minute, une température de maintien (42) située entre 1500 °C et 1600 °C ainsi qu'un temps de maintien (43) situé entre 5 minutes et 10 minutes.

7. Procédé selon l'une quelconque des revendications 1 à 5, **caractérisé en ce que** le matériau sélectionné est de l'oxyde de zirconium (ZrO₂), la prothèse dentaire à fabriquer étant un bridge d'au maximum 6 dents liées ou au maximum 6 dents individuelles ou couronnes partielles, un deuxième profil de température (44) pour un frittage, comprenant un taux de chauffage (45) situé entre 70 °C/minute et 200 °C/minute, comprenant une température de maintien (46) située entre 1450 °C et 1550 °C ainsi qu'un temps de maintien (47) situé entre 20 minutes et 40 minutes, étant déterminé.

8. Procédé selon l'une quelconque des revendications 1 à 5, **caractérisé en ce que** le matériau sélectionné est de l'oxyde de zirconium (ZrO₂), la prothèse dentaire à fabriquer comprenant plus de 6 dents individuelles, un troisième profil de température (48) pour un frittage, comprenant un taux de chauffage (49) situé entre 10 °C/minute et 70 °C/minute, comprenant une température de maintien (50) située entre 1500 °C et 1600 °C ainsi qu'un temps de maintien (51) situé entre 100 minutes et 140 minutes, étant déterminé.

9. Procédé selon l'une quelconque des revendications 1 à 5, **caractérisé en ce que** le matériau sélectionné est de l'oxyde d'aluminium (Al₂O₃), un quatrième profil de température (52) pour un frittage, comprenant un taux de chauffage (55) situé entre 10 °C/minute et 70 °C/minute, comprenant une température de maintien (56) située entre 1500°C et 1600°C ainsi qu'un temps de maintien (57) situé entre 100 minutes et 140 minutes, étant déterminé.

10. Procédé selon l'une quelconque des revendications 1 à 9, **caractérisé en ce que** le modèle 3D (9) de la prothèse dentaire (1) à fabriquer est présenté graphiquement au moyen d'un dispositif d'affichage (39), des parties (27, 28) déterminées du modèle 3D (9) dépassant la valeur limite déterminée de l'épaisseur de paroi latérale ou de l'épaisseur de paroi occlusale (11) étant marquées graphiquement.

11. Procédé selon la revendication 10, **caractérisé en ce que** l'utilisateur adapte manuellement les parties (27, 28) marquées en utilisant des outils virtuels (29) ou que les parties (27, 28) marquées sont adaptées automatiquement au moyen de l'ordinateur (17) de telle façon que la valeur limite pour l'épaisseur de paroi vestibulaire (10, 11) ou pour l'épaisseur de paroi occlusale (11) ne soit pas dépassée, de telle sorte que le frittage puisse être réalisé avec le premier profil de température (40) plutôt qu'avec le deuxième profil de température (44) pour la prothèse dentaire (1) à fabriquer selon ce modèle 3D adapté (32).

12. Système pour l'exécution d'un procédé pour la planification d'un traitement thermique d'une prothèse dentaire (1) au moyen d'un four de frittage (2) comprenant un ordinateur (17), un modèle 3D (9) de la prothèse dentaire (1) étant déjà disponible, **caractérisé en ce que**, en fonction de paramètres géométriques (10, 11, 12, 13) déterminés du modèle 3D (9) et de paramètres de matériaux déterminés de la prothèse dentaire (1) à fabriquer, un profil de température (16) pour le frittage de la prothèse dentaire (1) pouvant être déterminé automatiquement au moyen de l'ordinateur (17), les paramètres de matériaux d'un matériau sélectionné pour la fabrication de la prothèse dentaire (1) étant une conductivité thermique, une résistance au choc thermique, un taux de chauffage maximal et/ou une valeur limite de température pour une transformation de phase du matériau.

13. Système selon la revendication 12, **caractérisé en ce que** les paramètres géométriques (10, 11, 12, 13) du modèle 3D (9) de la prothèse dentaire (1) sont une épaisseur de paroi latérale maximale (10), une épaisseur de paroi occlusale maximale (11), un rapport entre l'épaisseur de paroi occlusale maximale (11) et l'épaisseur de paroi latérale maximale (10), une section transversale maximale (12) de la prothèse dentaire, un volume total (13) de la prothèse dentaire (1), une longueur totale maximale de la prothèse dentaire (1) et/ou une variation de la section transversale maximale de la prothèse dentaire.

14. Système selon l'une quelconque des revendications 12 ou 13, **caractérisé en ce que** le système comprend un dispositif d'affichage (39), le modèle 3D (9) de la prothèse dentaire (1) à fabriquer pouvant être présenté graphiquement au moyen d'un dispositif d'affichage (39), des parties (27, 28) déterminées du modèle 3D (9) dépassant la valeur limite déterminée de l'épaisseur de paroi latérale ou de l'épaisseur de paroi occlusale pouvant être marquées graphiquement.

15. Système selon la revendication 14, **caractérisé en ce que** le système comprend des moyens de commande (30, 31) l'utilisateur adaptant manuellement les parties (27, 28) marquées au moyen d'outils virtuels (29) en utilisant les moyens de commande (30, 31) ou les parties (27, 28) marquées étant adaptées automatiquement au moyen de l'ordinateur (17) de telle façon que la valeur limite pour l'épaisseur de paroi vestibulaire ou pour l'épaisseur de paroi occlusale (11) ne soit pas dépassée, de telle sorte que le frittage puisse être réalisé avec le premier profil de température (16) plutôt qu'avec le deuxième profil de température (16) pour la prothèse dentaire à fabriquer selon ce modèle 3D adapté (9, 32).
